Europäisches Patentamt

European Patent Office

Office européen des brevets

(11) Publication number: **0 020 063**
A1

# EUROPEAN PATENT APPLICATION

(21) Application number: 80301622.9

(51) Int. Cl.³: **F 16 H 39/46**

(22) Date of filing: 16.05.80

(30) Priority: 04.06.79 US 45039

(43) Date of publication of application: 10.12.80
Bulletin 80/25

(84) Designated Contracting States: DE FR GB IT

(71) Applicant: EATON CORPORATION, 100 Erieview Plaza,
Cleveland Ohio 44114 (US)

(72) Inventor: Knapp, Kenneth Kermit, 311 14th Avenue W.,
Spencer, Iowa 51301 (US)

(74) Representative: Wright, Peter David John et al, R.G.C.
Jenkins & Co. 53-64 Chancery Lane, London WC2A 1QU
(GB)

(54) Hydrostatic transmission control system and control valve.

(57) A control system is disclosed for a hydrostatic trans-
mission of the type including a pump, the displacement
of which is controlled by a pair of stroking cylinders (31
and 33). Communication of control fluid from the charge
pump (23) to the stroking cylinders is controlled by a main
control valve (47) in response to movement of a manual
control lever (49). The main control valve includes a valve
housing (55) which defines a pair of passages (73 and 75)
through which control fluid is communicated to the strok-
ing cylinders by means of a pair of conduits (51 and 53).
A bore (83) interconnects the passages, and a valve mem-
ber (89) is rotatably disposed in a bore (85) which inter-
sects the first-mentioned bore (83).The valve member is
connected to a foot pedal (107) by means of a linkage
arrangement (109) such that depression of the foot pedal
causes rotation of the valve member and a sufficient amount
of fluid communication between the passages leading to
the stroking cylinders to reduce the pressure difference
between the stroking cylinders.

HYDROSTATIC TRANSMISSION
CONTROL SYSTEM

BACKGROUND OF THE DISCLOSURE

The present invention relates to control systems for hydrostatic transmissions, and more particularly, to such systems which control the fluid pressures in the stroking cylinders which control the angle of the swashplate of a variable displacement pump.

Hydrostatic transmissions and control systems therefore have become well known in the art. One of the common uses of such systems has been to transmit output torque from the engine of a vehicle into input torque to the vehicle drive wheels. This use of hydrostatic transmission systems has become especially common on large, off-the-road vehicles such as agricultural and construction equipment and, although the control system of the present invention may be advantageously applied for a variety of uses, it is especially suited for use with hydrostatic transmission systems which are used to propel such vehicles, and will be described in connection therewith.

In the conventional hydrostatic transmission control system used on such vehicles, the vehicle operator is able to select the desired transmission ratio, i.e., ratio of motor output speed to pump input speed, by means of a manual control lever. Typically, this control lever positions a control spool to port control pressure fluid from the charge pump to one of the stroking cylinders of the variable displacement pump, while porting the other stroking cylinder to tank. Therefore, the typical control valve of the type described above commands pump displacement and system flow regardless of the load on the system (system pressure) or stroker pressure, and in fact, with the type of control described above, stroker pressure will vary in response to variations in system pressure to maintain the commanded pump displacement.

On a vehicle having a control system of the type to which the present invention relates, it is frequently desirable for the operator to be able to perform a particular control function which cannot easily be performed by means of the manual control lever, or to perform a particular control function without changing the setting of the manual control lever. In a number of these types of "auxiliary" control functions, it is also desirable for the operator to have direct, selective control of stroker pressure, and thus, system pressure and torque. Examples of control functions which fit one or more of the criteria mentioned above include the following, each of which is preferably performed by operator control of a foot pedal, used generally in the manner of a clutch:

1. smooth acceleration up to a vehicle speed as pre-selected by means of the manual control lever;

2. decelerate smoothly to a stop while maintaining the pre-selected setting of the manual control lever;

3. quickly reduce stroker pressure and system pressure to facilitate braking of the vehicle while maintaining the pre-selected setting of the manual control lever;

4. achieve smooth "inching" control with manual control lever set to limit vehicle speed; and

5. relieve the torque applied to the gears during shifting of a range gear box.

A commercially available control which is somewhat capable of performing the above-described control functions is illustrated in U. S. Pat. No. 3,699,678, in which a foot pedal, controlled by the vehicle operator, may be used to vary the setting on the high pressure relief valve which interconnects the system pressure

**0020063**

conduits. The referenced control effects system pressure directly, but does not directly control stroker pressure.

Although the control illustrated in the referenced patent generally performs satisfactorily, there are certain major disadvantages associated with such a control. Because system pressure is reduced without substantially changing the displacement of the pump, the flow output of the pump remains approximately constant during foot pedal control, with the excess fluid being pumped over the high pressure relief valve, thus wasting a substantial amount of pump horsepower. Another disadvantage relates to the fact that in such control systems, there typically is a relief valve unit disposed near the foot pedal, and therefore, near the vehicle operator. Because it is necessary to have some sort of high pressure pilot line connected to the relief valve unit, there is the possibility of a high pressure fluid leak occurring near the operator.

Another disadvantage of the prior art control relates to the downhill or "overrunning" mode of operation of the vehicle wherein the motor is driven to act as a pump, and the pump is driven by the pressurized fluid. Under such conditions, if the operator depresses the foot pedal in the prior art control, thus dumping over the reliefs the fluid being pumped by the motor, the dynamic braking ability inherent in a hydrostatic transmission is lost, and the vehicle is permitted to free wheel, which can present a safety hazard.

SUMMARY OF THE INVENTION

Accordingly, it is an object of the present invention to provide a hydrostatic transmission control system which permits the operator to control system pressure independent of the main control commanding pump displacement, but which avoids the disadvantages of the prior art control discussed previously.

It is a related object of the present invention to provide such a control which may be used by the operator in the manner of a clutch.

It is a more specific object of the present invention to provide such a control which permits the operator to directly control stroker pressure.

The above and other objects of the present invention are accomplished by the provision of an improved control system for a hydrostatic transmission of the type including a variable pump and fluid operable means for varying the displacement of the pump. The fluid operable means defines first and second pressure chambers for varying pump displacement in first and second opposite directions. Included is a source of pressurized control fluid and supply conduit means in fluid communication with the source of control fluid. Main control valve means controls the flow of control fluid from the supply conduit means to one of the first and second fluid pressure chambers through one of first and second fluid conduit means, respectively. The main control valve means also controls the flow of fluid from the other of the first and second fluid chambers, through the other of the first and second fluid conduit means to a reservoir. The improvement in the control system comprises an auxiliary control means defining control conduit means operable to communicate control fluid from the one fluid conduit means to the other fluid conduit means. The auxiliary control valve means includes a movable valve member movable between a first position preventing fluid communication from the one to the other fluid conduit means, and a second position permitting substantial fluid communication from the one to the other fluid conduit means. A manual control member is adapted for manual actuation by a vehicle operator and is movable between a first condition and a second condition. The control system includes linkage means connecting the movable valve member and the manual control member for movement of the valve member between the first and second positions in response to manual actuation of the manual control member between the first and second conditions of the control member. The control permits a progressive reduction of the pressure difference between the first and second fluid pressure chambers in response to progressive actuation of the manual control member from the first condition toward the second condition.

## BRIEF DESCRIPTION OF THE DRAWINGS

FIG. 1 is an illustration, partly in schematic and partly in cross section, of a hydrostatic transmission and control system in accordance with the present invention.

FIG. 2 is a transverse cross section of the main control valve, taken generally on line 2-2 of FIG. 1.

FIG. 3 is a fragmentary cross section taken on line 3-3 of FIG. 2.

FIG. 4 is a transverse cross section taken on line 4-4 of FIG. 3, but on a larger scale, illustrating one operating position of the control of the present invention.

FIG. 5 is a transverse cross section, similar to FIG. 4, illustrating the control of the present invention in a different operating position.

FIG. 6 is a fragmentary top plan view of the main control valve and a portion of the system linkage.

FIG. 7 is a view, partly in transverse cross section, similar to FIG. 2, illustrating an alternative embodiment of the present invention.

## DESCRIPTION OF THE PREFERRED EMBODIMENTS

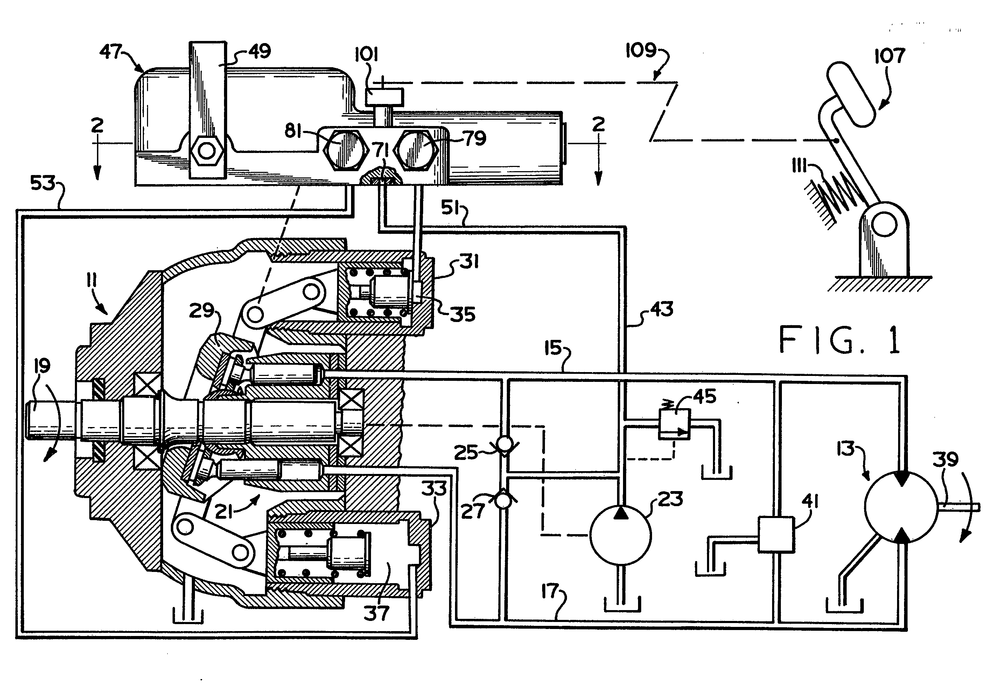

Referring now to the drawings, which are not intended to limit the invention, the hydrostatic transmission system of FIG. 1 includes a variable displacement axial piston pump, generally designated 11, hydraulically coupled to a fixed displacement motor 13 by means of conduits 15 and 17. Pump 11 may be of a well known type, and include an input shaft 19 which is used to transmit torque from a prime mover (not shown) to a rotating group, generally designated 21, as well as to a charge pump 23. The output of the charge pump 23 is capable of providing make-up fluid either to conduit 15, through check valve 25, or to conduit 17, through check valve 27, whichever of the conduits 15 and 17 is at the lower pressure.

Pump 11 further includes a swashplate 29 which is movable, to vary the displacement of the pump 11, by a pair of stroking cylinders 31 and 33 of a type well known in the art. The stroking cylinders 31 and 33 define pressure chambers 35 and 37, respectively, which when pressurized, are operable to bias the swashplate 29 in opposite directions.

The motor 13 includes an output shaft 39, and connected in hydraulic parallel with the motor 13 is a known control mechanism 41 which includes a shuttle valve, a high pressure relief valve and a charge pressure relief valve. The output of the charge pump 23, in excess of the necessary make-up fluid, is communicated by means of a supply conduit 43 to a control mechanism, to be described subsequently, the conduit 43 also being connected to a charge pump relief valve 45. The pump 11, the motor 13, the charge pump 23, the control mechanism 41, and the relief valve 45 are all in fluid communication with a fluid reservoir, shown schematically herein as individual reservoirs, but which typically comprises a single reservoir.

In the embodiment of the control system illustrated in FIG. 1, the displacement of the pump 11, and thus the speed ratio between the input shaft 19 and the output shaft 39, is varied by a main control valve, generally designated 47. The main control valve 47 is capable of changing the position of the swashplate 29 by communicating control fluid, received from the charge pump 23 by means of the conduit 43, to one of the strokers 31 or 33, while communicating the other of the strokers to the reservoir. The control pressure fluid is communicated from the main control valve 47 to the strokers 31 and 33, in response to movement of a manual control lever 49, by means of conduits 51 and 53, respectively.

The main control 34 may be of the type illustrated in U. S. Pat. No. 4,050,247, assigned to the assignee of the present invention, and which is incorporated herein by reference. However, the reference to 4,050,247 is by way of example only, and is not intended to limit the invention. Within the scope of the present invention, it is essential only that the main control valve be operable to control the flow of control fluid from the supply conduit 43 to one of the conduits 51 or 53, while communicating control fluid from the other of the conduits to the reservoir. The main control valve 47, utilized in the subject embodiment of the invention, will be described in greater detail subsequently.

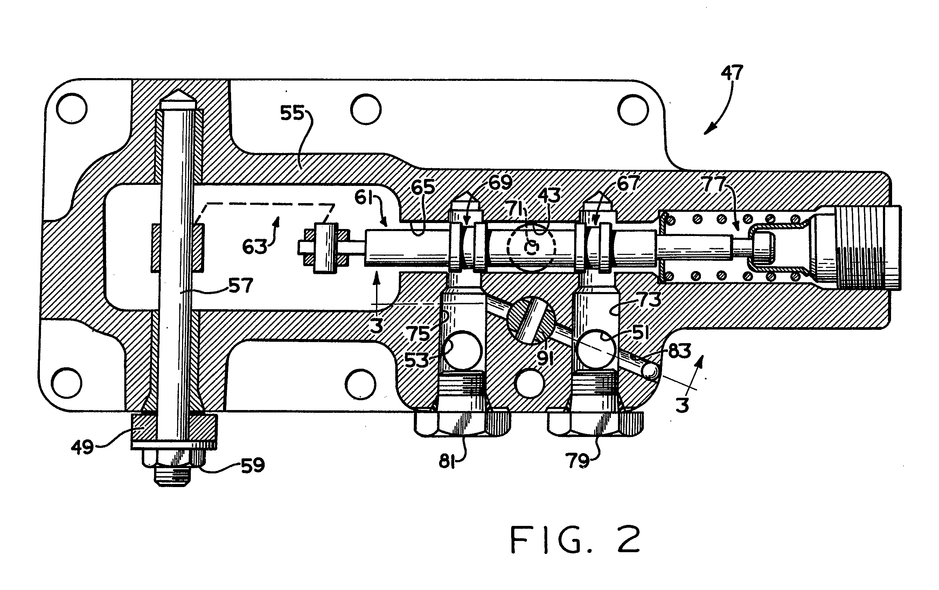

Referring now to FIG. 2, in conjunction with FIG. 1, the main control valve 47 is shown in greater detail, and includes a valve housing 55, within which is rotatably disposed a control shaft 57, which projects out of one side of the housing 55. The manual control lever 49 is rigidly secured to the control shaft 57 by suitable means, shown herein as a nut 59. The control shaft 57 is connected to a control spool, generally designated 61, by a linkage arrangement indicated schematically as 63. The linkage 63 is connected to the swashplate 29 by a feedback linkage, shown schematically as a dashed line in FIG. 1. Movement of the swashplate toward its commanded position is translated by the feedback linkage into movement of the control spool 61 toward its neutral position, as is well known in the art.

The valve housing 55 defines a valve bore 65, and the control spool 61 includes a pair of axially spaced lands 67 and 69 disposed in sliding, sealing engagement with the valve bore 65. The supply conduit 43 intersects the valve bore 65 to communicate control pressure fluid from the charge pump 23 into the bore 65, between the lands 67 and 69, through an inlet orifice 71 (also shown schematically in FIG. 1). The valve housing 55 also defines a pair of axially spaced drilled passages 73 and 75 which intersect the valve bore 65, and are spaced slightly outwardly from the lands 67 and 69, respectively, such that the passages 73 and 75 are in fluid communication with the reservoir, when the control spool 61 is in the neutral position illustrated in FIG. 2. A centering spring assembly 77 is provided to center the control spool 61, relative to the passages 73 and 75. The passages 73 and 75 extend from the valve bore 65 to the exterior of the valve housing 55, terminating in a pair of threaded ports which are normally referred to as "servo access ports", into which is threaded a pair of hex-head plugs 79 and 81, respectively. Adjacent the plugs 79 and 81, the passages 73 and 75 communicate with the conduits 51 and 53, respectively.

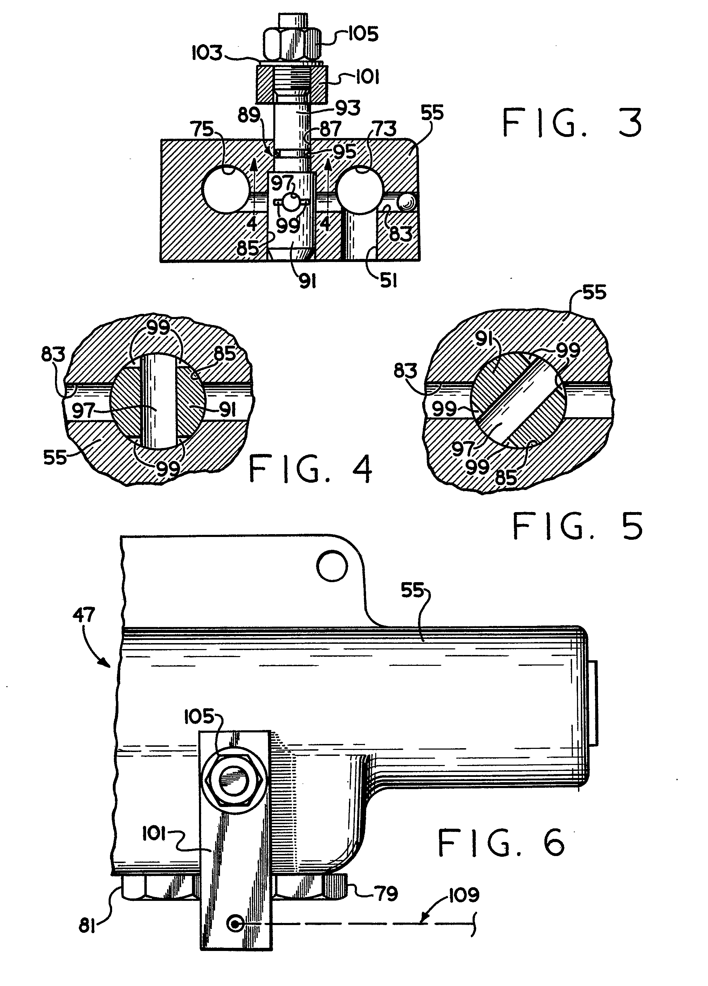

Referring now also to FIG. 3, the valve housing 55 defines a pair of intersecting bores, including a bore 83 which is horizontal in FIG. 3, and a vertical bore which includes a relatively larger bore portion 85, and a relatively smaller bore portion 87. The horizontal bore 83 intersects the vertical bore portion 85, and intersects the passage 75 between the spool bore 65 and the conduit 53. Because of the angle at which the bore 83 is drilled in the subject embodiment, the bore 83 intersects the passage 73 adjacent the conduit 51.

Rotatably disposed within the vertical bore is a bore member, generally designated 89. The valve member 89 includes a spool portion 91, disposed within the bore portion 85, and a stem portion 93, disposed within the bore portion 87, and having an O-ring seal member 95 preventing fluid leakage therebetween.

As may best be seen in FIG. 4, the spool portion 91 defines a transverse passage 97 and, adjacent each end of the passage 97, is a pair of metering notches 99. Although the exact configuration of the passage 97 and the metering notches 99, or their sizes relative to the bore 83 and bore portion 85, are not essential features of the present invention, it will become apparent from the subsequent description that there must be a rotational position of the valve member 89 wherein the spool portion 91 substantially prevents fluid communication between the passages 73 and 75.

Referring now to FIG. 5, the valve member 89 is illustrated in a different rotational orientation wherein diagonally opposite metering notches 99 are in fluid communication with the bore 83 to permit substantial fluid communication between the passages 73 and 75. It should be understood that, when the term "substantial" fluid communication is used herein, what is important is not the actual rate of fluid flow between the passages 73 and 75, but instead, the rate of change of the pressure difference between the passages 73 and 75, and thus, between the stroker chambers 35 and 37. By way of example only, and not limitation, the passage 97 and metering notches 99 should be sized and configured such that, with the valve member 89 in the position shown in FIG. 5, the stroker pressure chambers 35 and 37 can go from maximum possible pressure differential to approximately equal pressure in about .5 seconds, or at the most, about 1 second.

Referring now primarily to FIG. 3, adjacent the upper end of the stem portion 93 is a set of external threads, and in threaded engagement therewith is an ebongated, manual control lever 101 which is fixed to the stem portion 93, such as by means of a washer 103 and a nut 105 to maintain a fixed angular relationship between the lever 101 and the spool portion 91. Referring again to FIG. 1, there is illustrated somewhat schematically a foot pedal, generally designated 107, which may be used to provide manual actuation of the control valve 89. Although it is not an essential feature of the present invention that movement of the valve member 89 be controlled by a foot pedal, it is an essential feature that the movement of the valve member 89 be in response to movement of manually controlled member, and preferably, as a result of manual actuation by the vehicle operator. In the subject embodiment, the foot pedal 107 is the preferred form of manual control member for reasons which will become apparent in connection with the subsequent description of the operation of the invention. Control of the rotational position of the valve member 89, in response to movement of the foot pedal 107 is accomplished by means of a linkage arrangement, generally designated 109, the details of which form no part of the present invention, and which is shown only schematically herein. The end of the linkage arrangement 109, opposite the foot pedal 107, is suitably connected to the control lever 101 at a location disposed rasially from the axis of the valve member 89, such that axial movement (depression) of the foot pedal 107 results in rotational movement of the valve member 89. In the subject embodiment, with the foot pedal 107 biased to its normal position shown in FIG.1, the valve member 89 is in the position shown in FIG. 4, whereas, with the foot pedal 107 fully depressed in opposition to the bias of spring 111, the valve member 89 is rotated 45 degrees to the position shown in FIG. 5.

In operation, the vehicle operator may use the foot pedal 107 in the manner of a clutch pedal. For example, when starting the vehicle, the operator may depress the pedal 107, moving the spool 91 to the position shown in FIG. 5, then position the manual control lever 49 to correspond to the eventually-desired vehicle speed. At this point, the vehicle has not yet begun to move, but as the operator slowly lets up the pedal 107, slowly rotating spool 91 toward the closed position of FIG. 4, stroker pressure and system pressure and torque slowly begin to rise, and the vehicle will begin to move slowly, and smoothly approach the preset vehicle speed. It should be apparent that the above-described mode of operation will occur regardless of the vehicle direction, i.e., regardless of which of the conduits 51 or 53 is to have higher pressure. It should also be apparent that the above-described mode of operation may be reversed, i.e., used to slow the vehicle to a stop, either by coasting or with a brake, from a preset vehicle speed, without changing the setting of the manual control lever 49. It should also be apparent from the foregoing how to use the control of the present invention in the various other manners referred to in the background of the present specification, such as for low speed control ("inching control"), or to relieve the torque on a gear box during shifting, again without the necessity of changing the setting of the manual control lever 49.

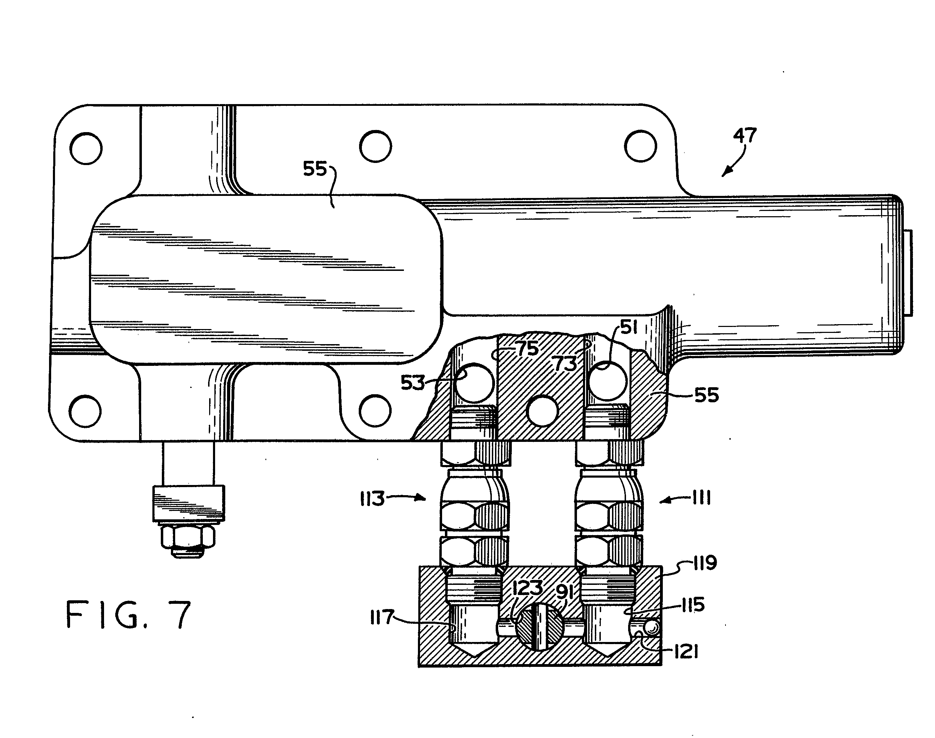

Referring now to FIG. 7, there is illustrated an alternative embodiment of the present invention in which generally like elements bear like numerals, and new elements bear new numerals, beginning with 111. In FIG. 7, a portion of the housing 55 is broken away to expose the passages 73 and 75. The plugs 79 and 81 have been removed, and in their place there is a pair of fitting assemblies 111 and 113, threaded into the terminal portions of the passages 73 and 75, respectively. The opposite ends of the fitting assemblies 111 and 113 are in threaded engagement with a pair of ports which comprise the terminal portions of a pair of bores, 115 and 117, respectively, defined by a valve block 119. A bore 121 is drilled through the valve block 119 and intersects the bores 115 and 117. Intersection the bore 121 is a bore 123 which may have the same configuration as the bore portions 85 and 87 in the preferred embodiment. Rotatably disposed within the bore 123 is a valve member substantially identical to the valve member 89 of the preferred embodiment, including the spool portion 91.

It should be noted that the only difference between the main control valve 47 in FIG. 7 and in the preferred embodiment is the absence of the bore 83 from the housing in the FIG. 7 embodiment. Therefore, it should be understood that the FIG. 7 embodiment represents a preferred way of "retro-fitting" the present invention to a standard control valve already in use, but not equipped with the present invention.

During the development of the present invention, it was determined experimentally that the responsiveness and degree of control provided by the invention are best when the communication between the conduits 51 and 53 occurs within the main control valve 47. If, in an attempt to reduce the length of the linkage 109, the valve member 89 is located away from the main control valve 47, the resulting pressure drop in the hoses between the control valve 47 and the valve member 89 adversely effects the operation of the control system.

It is believed that it would be obvious to one skilled in the art, from a reading of the foreoing specification, to coordinage the size of the inlet orifide 71 with the sizes of the passage 97 and metering notches 99 in such a manner to achieve the desired "gain" of the control system, i.e., the amount of change in stroker pressure per degree of rotation of the valve member 89. Certain other alterations and modifications will become apparent to those skilled in the are, and it is intended to include within the scope of the invention such other alterations and modifications, insofar as they come within the scope of the appended claims.

CLAIMS:

1.   A control system for a hydrostatic transmission of the type including a prime mover driven variable displacement pump; fluid operable means for varying the displacement of the pump, the fluid operable means defining first and second fluid pressure chambers for varying the displacement of the pump in first and second opposite directions; a source of pressurized control fluid for operating the fluid operable means; supply conduit means in fluid communication with the source of control fluid, main control valve means operable to control the flow of control fluid from the supply conduit means to one of the first and second fluid pressure chambers through one of first and second fluid conduit means, respectively, and to control the flow of control fluid from the other of the first and second fluid chambers, through the other of the first and second fluid conduit means, to a reservoir, the improvement comprising:

(a)   auxiliary control valve means defining control conduit means operable to communicate control fluid from said one of the first and second fluid conduit means to said other of the first and second fluid conduit means;

(b)   said auxiliary control valve means including a movable valve member movable between a first position substantially preventing fluid communication from said one to said other fluid conduit means, and a second position permitting substantial fluid communication from said one to said other fluid conduit means;

(c)   a manual control member adapted for manual actuation by a vehicle operator, said manual control member being movable between a first condition and a second condition;

(d)   linkage means connecting said movable valve member and said manual control member for movement of said valve member between said first and second positions in response to manual actuation of said manual control member between said first and second conditions of said manual control member to progressively reduce the pressure drop between the first and second fluid pressure chambers in response to progressive actuation of said manual control member from said first condition toward said second condition.

2. A control system as claimed in claim 1 wherein the fluid operable means for varying the displacement of the pump comprises first and second stroking cylinders defining the first and second fluid pressure chambers, respectively.

3. A control system as claimed in claim 1 wherein the supply conduit means includes means operable to provide substantial restriction to the flow of control fluid through the supply conduit means.

4. A control system as claimed in claim 1 wherein the main control valve means includes a valve housing defining a spool bore and first and second passages extending from said spool bore to the exterior of said valve housing, the first and second fluid conduit means including said first and second passages, respectively.

5. A control system as claimed in claim 4 wherein said control conduit means comprises a bore communicating between said first and second passages.

6. A control system as claimed in claim 5 including a second bore intersecting said bore communicating between said first and second passages, said movable valve member comprising a valve spool disposed in said second bore.

7. A control system as claimed in claim 6 wherein said movable valve member comprises a rotatable valve spool operable to rotate between said first position and said second position.

8.    A control system as claimed in claim 7 wherein said rotatable valve spool defines a transverse bore disposed to permit fluid communication therethrough when said valve spool is in said second position.

9. A main control valve for a hydrostatic transmission of the type including a prime mover driven variable displacement pump having a swashplate; fluid operable means for varying the displacement of the swashplate, the fluid operable means defining first and second fluid pressure chambers for varying the displacement of the pump in first and second opposite directions and first and second fluid conduit means communicating with the first and second fluid pressure chambers, respectively; a source of pressurized control fluid for operating the fluid operable means; supply conduit means in fluid communication with the source of control fluid, the main control valve comprising:

(a) a valve housing defining a valve bore;

(b) a valve spool slidably disposed in said valve bore and including first and second axially spaced lands;

(c) said valve housing further defining an inlet port in fluid communication with the supply conduit means, said inlet port communicating with said valve bore between said first and second lands;

(d) said valve housing further defining first and second fluid passages communicating with said valve bore, adjacent said first and second lands, respectively, and communicating with the first and second fluid conduit means, respectively;

(e) linkage means connected to said valve spool and operable to move said valve spool, in response to movement of a main control member, between a first position wherein said valve spool permits communication between said inlet port and said first fluid passage and between said second fluid passage and a reservoir, and a second position wherein said valve spool permits communication between said inlet port and said second fluid passage and between said first fluid passage and said reservoir whereby the main control member is effective to select pump displacement, said linkage means including means connected to the pump swashplate to move said valve spool in response to movement of the swashplate;

(f) said valve housing defining control conduit means communicating between said first and second fluid passages;

(g) a movable valve member operatively associated with said control conduit means and having a first position substantially preventing fluid communication through said control conduit means, and a second position permitting substantial fluid communication through said control conduit means, between said first and second fluid passages; and

(h) said movable valve member being adapted for movement between said first and second positions in response to movement of a manual control member between first and second conditions, respectively, whereby the manual control member is effective to select fluid pressure in said fluid operable means.

10. A main control valve as claimed in claim 9 including a second bore intersecting said control conduit means, said movable valve member comprising a valve spool disposed in said second bore.

11. A main control valve as claimed in claim 10 wherein said valve spool is rotatable between said first position and said second position.

FIG. 1

0020063

FIG. 2

0020063

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim |
|---|---|---|
| D | US - A - 3 699 678 (INTERNATIONAL HARVESTER COMPANY) <br> * Fig. 1 - 5 * <br> -- | 1 |
| D,- | US - A - 4 050 247 (EATON CORPORATION) <br> * Fig. 1 - 7 * <br> -- | 1-4,9 |
| A | FR - A - 2 149 658 (SOCIETE ANONYME FRANCAISE DU FERODO) <br> * Fig. 1 - 8 * <br> -- | 1 |
| A | DE - B - 1 500 946 (SUNDSTRAND CORP.) <br> * Fig. 1,2; column 2, line 30 to column 8, line 25 * <br> -- | 1,9 |
| A | GB - A - 1 278 726 (SUNDSTRAND CORP.) <br> * Fig. 1 * <br> -- | 1,9 |
| A | DE - A - 1 775 590 (TOWMOTOR CORP.) <br> * Fig. 1 - 3 * <br> -- | 1 - 8 |
| A | GB - A - 1 220 727 (TOWMOTOR CORP.) <br> * Drawing * <br> -- | 1,9 |
| A | GB - A - 1 523 279 (MASSEY-FERGUSON SERVICES N.V.) <br> * Drawing * <br> -- | 1 |

**CLASSIFICATION OF THE APPLICATION (Int. Cl. 3)**

F 16 H 39/46

**TECHNICAL FIELDS SEARCHED (Int.Cl. 3)**

F 16H 39/00
F 15B 13/00
F 15B 15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| VIENNA | 17-07-1980 | WIDHALM |

EPO Form 1503.1 06.78